(19) Europäisches Patentamt
European Patent Office
Office européen des brevets

(11) EP 0 797 321 A1

(12) # DEMANDE DE BREVET EUROPEEN

(43) Date de publication:
**24.09.1997 Bulletin 1997/39**

(51) Int Cl.6: **H04B 10/18**

(21) Numéro de dépôt: **97400553.0**

(22) Date de dépôt: **13.03.1997**

(84) Etats contractants désignés:
**DE ES FI GB IT NL SE**

(30) Priorité: **18.03.1996 FR 9603338**

(71) Demandeur: **Alcatel Submarine Networks**
**92110 Clichy (FR)**

(72) Inventeurs:
- **Brindel, Patrick**
  **91310 Longpont sur Orge (FR)**
- **Brun, Elisabeth**
  **75014 Paris (FR)**

(74) Mandataire: **Smith, Bradford Lee et al**
**c/o Alcatel Alsthom Recherche,**
**Intellectual Property Department**
**30, avenue Kléber**
**75116 Paris (FR)**

(54) **Procédé et système de transmission optique à solitons**

(57) Dans un procédé de transmission optique des solitons sont transmis à travers une succession de fibres et y subissent une décroissance progressive de leur intensité Pour limiter les déformations des solitons, cette décroissance de leur intensité est accompagnée par une décroissance de la dispersion chromatique de ces fibres. Selon l'invention on place pour cela dans la succession de fibres au moins une première fibre (F1) présentant une décroissance longitudinale continue de sa dispersion chromatique. Les fibres suivantes (F2... F6) présentent des dispersions respectives (D2...D6) longitudinalement constantes formant une suite décroissante.

L'invention s'applique aux télécommunications.

FIG. 2

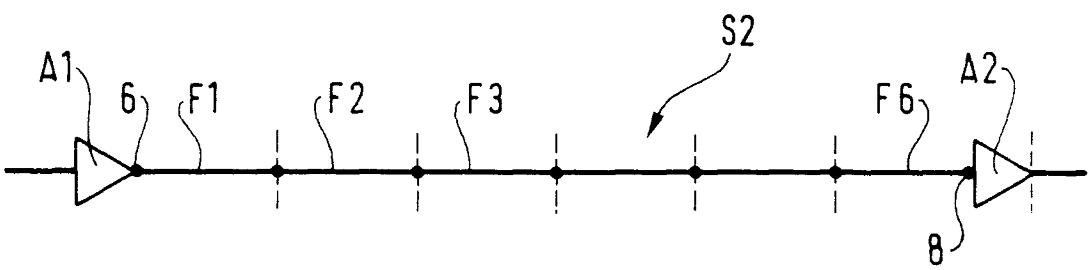


EP 0 797 321 A1

## Description

La présente invention concerne la transmission optique et plus spécifiquement la transmission d'informations par l'intermédiaire d'impulsions de lumière portant ces informations et guidées par des fibres optiques.

Les fibres optiques connues présentent des dispersions de vitesses de groupe qui sont aussi appelées dispersions chromatiques et qui seront plus simplement appelées ci-après "dispersions". Une telle dispersion fait varier la vitesse des composantes spectrales d'une impulsion en fonction de leurs fréquences optique ce qui provoque une déformation de cette impulsion c'est à dire plus précisément une déformation du profil temporel de l'amplitude du champ électromagnétique de cette impulsion. Par ailleurs un effet Kerr, appelé aussi non linéarité apparait dans ces fibres et fait varier les phases relatives de ces composantes. Une compensation mutuelle de cet effet et de la dispersion peut alors se produire en ce qui concerne le profil d'amplitude du champ d'une impulsion. Il faut pour cela que cette impulsion présente une forme de profil d'amplitude, une distribution de phase et une intensité convenables dépendant de la fibre, l'impulsion étant alors appelée soliton fondamental. Un tel soliton se propagerait indéfiniment sans déformation si cette intensité était parfaitement réalisée et maintenue.

Les fibres optiques présentent malheureusement aussi des pertes qui font décroitre progressivement cette intensité et il n'apparait pas pratique actuellement de compenser ces pertes par une amplification continue qui permettrait de maintenir une intensité d'impulsion constante. C'est pourquoi l'on réalise une amplification périodique par des amplificateurs à fibres dopées, par exemple à l'erbium, insérés à intervalles réguliers dans une ligne constituée de fibres optiques. La succession de fibres s'étendant entre deux amplificateurs sera appelée ci-après un segment. Cette amplification périodique fait varier alternativement l'intensité des impulsions entre deux valeurs extrêmes qui sont atteintes aux deux extrémités de chaque segment. Cette intensité ne peut être égale à celle du soliton fondamental que d'une manière transitoire et des déformations apparaissent Elles ont pour inconvénient essentiel d'entrainer la dispersion d'une partie de l'énergie et un élargissement moyen de l'impulsion au fur et à mesure de sa propagation à travers les segments. Elles peuvent alors pénaliser la transmission.

Plusieurs dispositions ont été proposées pour au moins limiter ces déformations dans le cas d'une telle amplification périodique Selon une première telle disposition, deux conditions doivent être réunies. Une première condition est que la distance entre amplificateurs reste inférieure à la période soliton Zc définie à la fin de la présente description La deuxième condition est qu'une intensité moyenne des impulsions soit rendue égale sur le segment à l'intensité du soliton fondamental. L'impulsion est alors appelée "soliton moyen". Son intensité varie entre d'une part une valeur initiale supérieure à celle du soliton fondamental et atteinte à l'entrée de chaque segment, d'autre part une valeur finale inférieure à celle du soliton fondamental et atteinte à la sortie du segment. L'utilisation d'un soliton moyen permet de compenser des déformations initiales subies au voisinage de l'entrée du segment, des déformations finales subies au voisinage de la sortie du segment. La propagation d'un soliton moyen est notamment décrite dans un article : "Soliton Propagation in long fibers with Periodically Compensated Loss", L .F. Mollenauer, J/P. Gordon and M.N. Islam, IEEE journal of Quantum Electronis, Vol QE22, N°1, January 1986.

Mais, lorsque la distance entre amplificateurs s'accroit pour devenir voisine de la période soliton les déformations du soliton moyen s'accentuent. C'est pourquoi une deuxième disposition a été proposée pour limiter les déformations des impulsions dans le cas d'une amplification périodique. Selon cette deuxième disposition connue la dispersion est rendue, en chaque point de la longueur de chaque fibre, approximativement égale à une dispersion optimale adaptée à l'intensité de l'impulsion en ce point et plus précisément telle que cette impulsion puisse continuer à constituer un soliton fondamental d'une fibre qui présenterait cette dispersion optimale. Compte tenu d'une décroissance sensiblement exponentielle de cette intensité le long du segment, cette dispersion optimale présente elle aussi une décroissance sensiblement exponentielle.

Dans le cadre de cette deuxième disposition connue il a été proposé de constituer les segments d'un système de transmission par des fibres à dispersion variable dans lesquelles la dispersion peut en tous points être sensiblement égale à la dispersion optimale. On peut lire à ce sujet un article OPTICS LETTERS /Vol.12, No. 1/january 1987. "Compensation of soliton broadening in nonlinear optical fibers with loss", Kazuhito Tajima pages 54-56. Une variation longitudinale continue de la dispersion peut en effet être obtenue grâce à une variation correspondante du diamètre du coeur de la fibre, cette variation de diamètre résultant elle même d'une variation temporelle des paramètres d'étirage au cours de l'opération d'étirage qui forme la fibre à partir d'une préforme de diamètre très supérieur. Une telle fibre à variation continue de dispersion présente cependant l'inconvénient d'avoir un coût de fabrication par kilomètre très supérieur à celui des fibres ordinaires dont la dispersion est longitudinalement constante.

C'est pourquoi il a été par ailleurs proposé de constituer chaque segment d'une ligne par une succession de fibres à dispersion constante en plaçant ces fibres par ordre de dispersions décroissantes et en choisissant ces dispersions de manière à ce qu'elles suivent à peu près la décroissance de la dispersion optimale. Cette solution est considérée dans un article OPTICS LETTERS/Vol. 19, No3/February 1, 1994, "Average soliton propagation in peiodically amplified systems with stepwise dispersion-profiled fiber", W. Forysiak, F. M.

Knox, and N.J. Doran. Elle présente l'inconvénient de laisser subsister des déformations gênantes des impulsions.

La présente invention a notamment pour but de limiter à la fois le coût d'une ligne à fibres optiques et les déformations subies par une impulsion au cours de sa propagation dans cette ligne. Elle a également pour but de permettre d'augmenter le débit d'information, la distance de transmission franchissable par une telle ligne et/ou l'espacement entre les amplificateurs d'une telle ligne.

Dans ces buts elle a notamment pour objet un procédé de transmission optique dans lequel la transmission de solitons à travers une succession de fibres entraine une décroissance progressive de l'intensité de ces solitons. Selon cette invention on choisit la deuxième disposition connue précédemment mentionnée pour limiter les déformations de ces solitons. Mais on limite d'une manière importante les inconvénients de cette deuxième disposition connue en plaçant dans la succession de fibres au moins une première fibre présentant une décroissance longitudinale continue de dispersion et des fibres suivantes présentant des dispersions repectives longitudinalement constantes formant une suite décroissante.

A l'aide des figures schématiques ci-jointes on va indiquer ci-après à titre d'exemple comment cette invention peut être mise en oeuvre. Lorsqu'un même élément est représenté sur plusieurs figures il y est désigné par les mêmes chiffres et/ou lettres de référence. Lorsque deux éléments sont désignés par une même lettre suivie de chiffres différents, ces deux éléments sont d'une même nature et assurent des fonctions analogues.

La figure 1 représente un système selon cette invention.

La figure 2 représente un segment du système de la figure 1.

La figure 3 comporte deux diagrammes, l'un en trait tireté représentatif de la variation longitudinale d'une dispersion optimale dans le segment de la figure 2, l'autre en trait plein représentatif de la variation longitudinale de la dispersion locale effective dans ce segment, ces dispersions étant portées en ordonnées, les abscisses étant mesurées à partir d'une entrée de ce segment.

Conformément à ces figures un système selon cette invention comporte au moins les éléments connus suivants :

- Au moins un segment tel que S2 comportant une succession de fibres F1...F6 pour guider une lumière de ce système d'une entrée 6 à une sortie 8 de ce segment. Une abscisse x est définie en chaque point de ce segment à partir d'une origine constituée par cette entrée. Les dites fibres présentent pour la lumière du système des pertes, des effets Kerr et des dispersions de vitesse de groupe de sorte que ce segment présente pour chaque abscisse respectivement un coefficient de pertes a, un coefficient de non linéarité et une dispersion locale DL. Cette dispersion locale est typiquement une dispersion décalée et varie avec cette abscisse de la façon décrite sur la figure 2. Typiquement les coefficients de pertes et de non linéarité sont à peu près constants. Le coefficient de non linéarité peut cependant varier en fonction du diamètre de coeur des fibres utilisées.

- Des éléments 2....A1 en amont dudit segment pour injecter dans son entrée 6 au moins une impulsion constituée de la lumière du système. Cette impulsion à une forme et une intensité initiales adaptées aux valeurs dudit coefficient de non linéarité et de ladite dispersion locale pour constituer approximativement au cours de sa propagation dans ce segment un soliton fondamental subissant seulement des déformations limitées. Son intensité décroit progressivement conformément à une loi de variation d'intensité définie au moins partiellement par ledit coefficient de pertes. Une dispersion optimale est définie à chaque abscisse par cette loi de variation d'intensité compte tenu dudit coefficient de non linéarité. Elle est telle que ledit soliton fondamental ne subirait pas lesdites déformations si la dispersion locale restait à chaque abscisse égale à la dispersion optimale. Le coefficient de pertes a étant typiquement constant, la loi de variation de l'intensité I de l'impulsion en fonction de l'abscisse x est du type

$$I(x)= I(o)e^{-ax}$$

l'intensité à l'entrée du segment étant I(o).. Le coefficient de non linéarité étant en outre typiquement lui aussi constant ou peu variables il en résulte que la dispersion optimale DM varie au moins approximativement selon la loi

$$DM(x) = DM(o)e^{-ax}.$$

Si la dispersion s'éloigne de la dispersion optimale les déformations sont d'autant plus importantes que l'écart avec la dispersion optimale est important. Il y a donc intérêt à ce que la dispersion locale décroisse globalement avec l'abscisse de manière à limiter les valeurs d'un écart de dispersion constitué à chaque abscisse par la différence entre cette dispersion locale et la dispersion optimale.

- Enfin des éléments en aval dudit segment pour recevoir ladite impulsion à la sortie de ce segment et pour utiliser cette impulsion.

Conformément à la présente invention la succession de fibres dudit segment comporte, de l'entrée à la sortie de ce dernier, d'abord un groupe d'au moins une fibre à dispersion variable F1 dans laquelle la dispersion locale DL décroit continuement en fonction de l'abscisse, d'une valeur initiale DA à une valeur finale DB. Elle comporte ensuite une succession de plusieurs fibres à dispersion constante F2 .... F6 dans chacune desquelles la dispersion locale DL est constante et constitue une dispersion de cette fibre. Les dispersions des fibres de cette succession forment une suite décroissante D2...D6.

La présente invention permet de limiter efficacement les déformations des impulsions parce qu'elle utilise une fibre à dispersion variable là où des écarts de dispersion d'une amplitude typique (2,8 ps/nmkm dans le cas d'un espacement entre amplificateurs de 180 km) provoqueraient des déformations importantes. Une telle fibre à dispersion variable permet en effet de supprimer presque totalement les écarts de dispersion sur toute sa longueur. Cette invention permet en même temps de limiter le coût de réalisation du segment parce qu'une fibre à dispersion variable, particulièrement coûteuse, n'est utilisée que sur une petite fraction initiale de la longueur du segment. Cette fraction initiale a typiquement une longueur comprise entre 1 et 10 km environ pour un segment de 60 à 180 km environ. Des écarts de dispersion ayant ladite amplitude typique, par exemple 1ps/nm.km peuvent par contre être tolérés sur la fraction restante de la longueur du segment. Compte tenu des dispersions des fibres disponibles sur un chantier, les ajustements de dispersion dans cette fraction peuvent être faits, non seulement par la sélection et l'ordre de succession des fibres, mais aussi par le choix des longueurs des fibres mises en place.

Les longueurs doivent être choisies telles que le rapport $L_i/Z_o$ soit supérieur à 1, $Z_o$ étant la période soliton et $L_i$ la longueur de la fibre mise en place. On sait que $Z_o = (\pi/2), Z_c$.

$Z_c$ étant la longueur caractéristique du soliton et valant $Z_c = 0,322.(2\pi c/\lambda^2)\ .dt^2\ /D_i$,

avec $\lambda$= longueur d'onde de la lumière utilisée,

c = vitesse de la lumière,

dt= largeur à mi-hauteur de l'impulsion soliton,

$D_i$ = dispersion chromatique de la fibre mise en place.

Typiquement, et comme représenté, un système de transmission selon la présente invention comporte les éléments connus suivants :

- Un émetteur 2 pour recevoir des informations à transmettre 3 et pour émettre en réponse des impulsions constituées de la lumière du système. Ces impulsions sont aptes à constituer approximativement des solitons fondamentaux au long du segment. Elles sont mutuellement identiques, et elles portent l'information à transmettre.

- Une ligne ayant typiquement une grande longueur pouvant atteindre plusieurs milliers de kilomètres. Cette ligne comporte une succession alternée de dits segments S1,...S40 et d'amplificateurs A1... A39 en série. Un premier segment S1 de cette succession reçoit ces impulsions de l'émetteur 2. Ces impulsions constituent approximativement des solitons fondamentaux tout au long de ce premier segment. Chaque amplificateur A1 reçoit ces impulsions avec une intensité diminuée par les pertes d'un segment précédent (S1) et il les transmet à un segment suivant avec une intensité accrue telle que ces impulsions constituent approximativemnt de solitons fondamentaux dans ce segment suivant.

- Enfin un récepteur 4 recevant les impulsions en sortie du dernier segment S40 de ladite ligne. Il fournit en réponse des informations transmises qui, dans la mesure où le système fonctionne correctement, correspondent aux dites informations qu'il fallait à transmettre.

**Revendications**

1. Procédé de transmission optique à solitons dans lequel des solitons sont transmis à travers une succession de fibres et y subissent une décroissance progressive de leur intensité, cette décroissance de l'intensité des solitons étant accompagnée par une décroissance de la dispersion chromatique de ces fibres, ce procédé étant caractérisé par le fait que l'on place dans la dite succession de fibres d'une part au moins une première fibre (F1) présentant une décroissance longitudinale continue de sa dispersion chromatique, d'autre part une pluralité de fibres suivantes (F2...F6) présentant des dispersions chromatiques respectives (D2...D6) longitudinalement constantes formant une suite longitudinalement décroissante.

2. Système de transmission optique à solitons, ce système utilisant une lumière et comportant :

   - au moins un segment (S2) comportant une succession de fibres (F1...F6) pour guider la dite lumière d'une entrée (6) à une sortie (8) de ce segment, une abscisse (x) étant définie en chaque point de ce segment à partir d'une origine constituée par cette entrée, les dites fibres présentant pour ladite lumière des pertes, des effets Kerr et des dispersions de vitesse de groupe de sorte que ce segment présente pour chaque dite abscisse respectivement un coefficient de pertes (a), un coefficient de non linéarité et une dispersion locale (DL), cette dispersion locale étant une dispersion décalée et variant avec cette abscisse,

   - des éléments (2....A1) en amont dudit segment pour injecter dans la dite entrée (6) de ce segment au moins une impulsion constituée de la dite lumière et ayant une forme et une intensité initiales adaptées aux valeurs dudit coefficient de non linéarité et de ladite dispersion locale pour que cette impulsion constitue approximativement au cours de sa propagation dans le segment un soliton subissant seulement des déformations limitées, l'intensité de cette impulsion décroissant progressivement conformément à une loi de variation d'intensité définie au moins partiellement par ledit coefficient de pertes, une dispersion optimale étant définie à chaque abscisse par ladite loi de variation d'intensité compte tenu dudit coefficient de non linéarité et étant telle que ledit soliton ne subirait les dites déformations qu'à un degré minimal si ladite dispersion locale restait à chaque abscisse égale à ladite dispersion optimale, ladite dispersion locale décroissant avec ladite abcisse de manière à limiter les valeurs d'un écart de dispersion constitué à chaque abscisse par la différence entre cette dispersion locale et la dite dispersion optimale, et

- des éléments en aval dudit segment pour recevoir ladite impulsion à ladite sortie de ce segment et pour utiliser cette impulsion.

le dit système étant caractérisé par le fait que ladite succession de fibres dudit segment comporte, de sa dite entrée jusqu'à sa dite sortie

- d'abord un groupe d'au moins une fibre à dispersion variable (F1) dans laquelle ladite dispersion locale (DL) décroit continuement en fonction de ladite abscisse,
- puis une succession de plusieurs fibres à dispersion constante (F1 ... F6) dans chacune desquelles la dite dispersion locale (DL) est constante et constitue une dispersion de cette fibre, les dispersions des fibres de cette succession formant une suite décroissante (D2... D6).

**3.** Système selon la revendication 2, ce système comportant

- un émetteur (2) pour recevoir des informations à transmettre (3) et pour émettre en réponse des impulsions constituées de ladite lumière, aptes à constituer des dits solitons fondamentaux, mutuellement identiques, et porteuses de ladite information à transmettre,
- une ligne comportant une succession alternée de dits segments (S1,A1...S40) et d'amplificateurs (A1...A39) en série, un premier segment (S1) de cette succession recevant ces impulsions dudit émetteur et étant tel que ces impulsions constituent sensiblement des solitons fondamentaux dans ce premier segment, chaque dit amplificateur (A1) recevant ces impulsions avec une intensité diminuée par les pertes d'un segment précédent (S1) et les transmettant à un segment suivant avec une intensité accrue telle que ces impulsions constituent sensiblement des solitons fondamentaux dans ce segment suivant, et
- un récepteur (4) recevant lesdites impulsions en sortie d'un dernier segment (S40) de ladite ligne et fournissant en réponse des informations transmises correspondant aux dites informations à transmettre.

FIG. 1

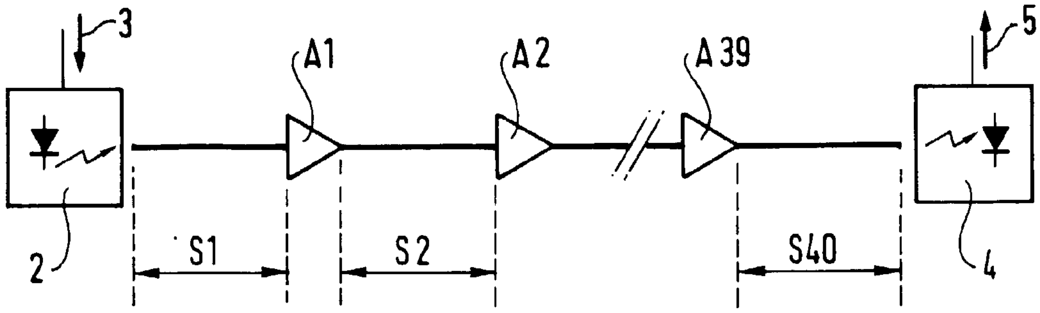


FIG. 2

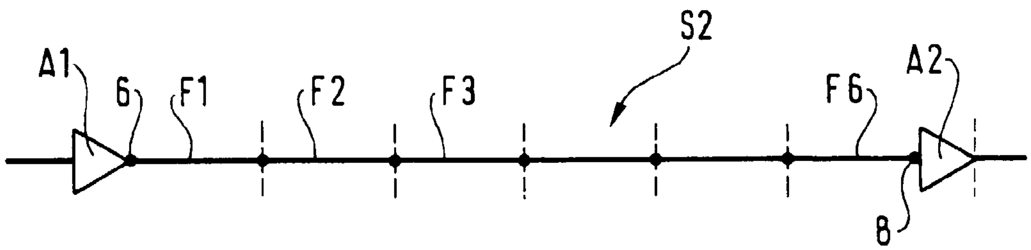


FIG. 3

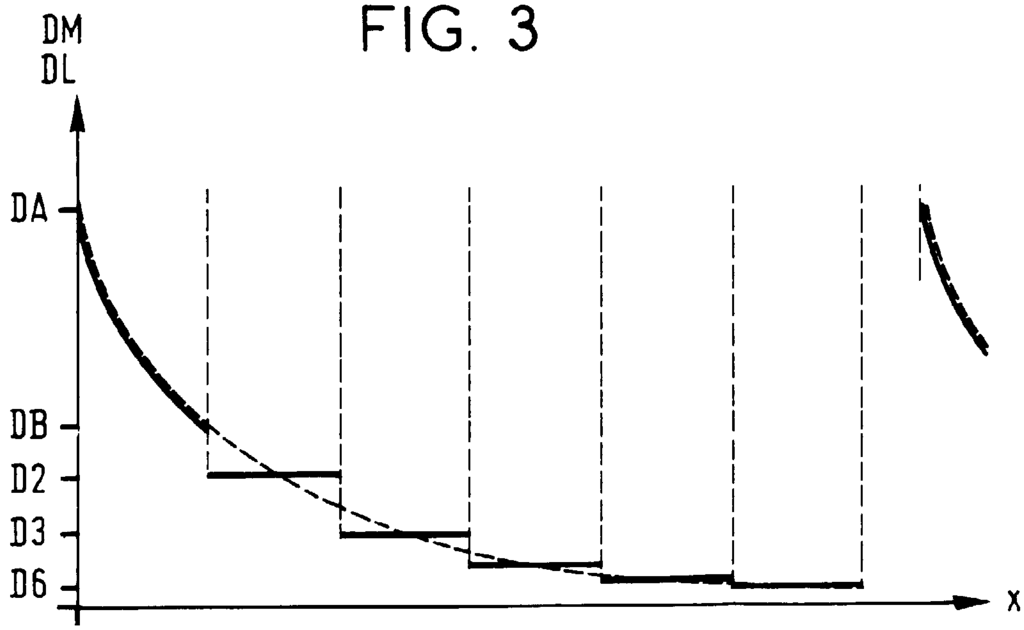

Office européen des brevets

# RAPPORT DE RECHERCHE EUROPEENNE

Numero de la demande
EP 97 40 0553

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | OPTICS LETTERS, vol. 19, no. 5, Mars 1994, WASHINGTON US, pages 341-343, XP000429269 MALOMED: "Ideal amplification of an ultrashort soliton in a dispersion-decreasing fiber" * page 341, colonne de gauche, ligne 25 - ligne 36 * * page 342, colonne de gauche, ligne 17 - ligne 23 * * figure 1 * --- | 1-3 | H04B10/18 |
| A | ELECTRONICS LETTERS, vol. 31, no. 19, 14 Septembre 1995, STEVENAGE GB, pages 1681-1682, XP000530396 RICHARDSON ET AL: "High quality soliton loss-compensation in 38km dispersion-decreasing fibre" * page 1681, colonne de droite, dernière ligne - page 1682, colonne de gauche, ligne 5 * * page 1682, colonne de gauche, ligne 14 - ligne 18 * --- | 1-3 | **DOMAINES TECHNIQUES RECHERCHES (Int.Cl.6)** H04B |
| A | OPTICS LETTERS, vol. 21, no. 1, Janvier 1996, WASHINGTON US, pages 39-41, XP000613299 HASEGAWA ET AL: "Reduction of collision-induced time jitters in dispersion-managed soliton transmission systems" * page 39, colonne de droite, ligne 4 - ligne 11 * * page 40, colonne de gauche, ligne 24 - ligne 32 * * figure 1 * ----- | 1-3 | |

Le présent rapport a été établi pour toutes les revendications

| Lieu de la recherche | Date d'achèvement de la recherche | Examinateur |
|---|---|---|
| LA HAYE | 23 Mai 1997 | Williams, M.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)